Europäisches Patentamt

European Patent Office

Office européen des brevets

(19)

(11) Veröffentlichungsnummer : **0 182 970**
**B1**

(12) **EUROPÄISCHE PATENTSCHRIFT**

(45) Veröffentlichungstag der Patentschrift :
24.01.90

(51) Int. Cl.⁵ : **H 04 N  5/92**, H 03 M  7/00

(21) Anmeldenummer : 85109034.0

(22) Anmeldetag : 19.07.85

(54) **Verfahren zur magnetischen Aufzeichnung und Wiedergabe von Telekommunikations-Signalen, insbesondere von Videotext- und/oder Kabeltext-Signalen.**

(30) Priorität : 10.11.84 DE 3441152

(43) Veröffentlichungstag der Anmeldung :
04.06.86 Patentblatt 86/23

(45) Bekanntmachung des Hinweises auf die Patenterteilung : 24.01.90 Patentblatt 90/04

(84) Benannte Vertragsstaaten :
AT DE FR GB IT

(56) Entgegenhaltungen :
AT--B--  372 561
US--A-- 3 303 284
US--A-- 3 876 944

(73) Patentinhaber :  GRUNDIG E.M.V.  Elektro-Mechanische Versuchsanstalt Max Grundig holländ. Stiftung & Co. KG.
Kurgartenstrasse 37
D-8510 Fürth/Bay. (DE)

(72) Erfinder : Hegendörfer, Max, Dipl.-Ing.
Pautzfelder Strasse 31
D-8550 Forchheim (DE)

**Beschreibung**

Die Erfindung bezieht sich auf eine Schaltungsanordnung zur Wiedergabe von in duobinärer Form aufgezeichneten Telekommunikations-Signalen.

Videotext (neuere Bezeichnung : Fernsehtext) ist bekanntermaßen ein zusätzlicher Informationsdienst der Sendeanstalten, mit dem Textinforma-tionen und Graphiken zum Fernsehteilnehmer im normalen Fernsehkanal während der Vertikal-Austastlücken des Fernsehbildes übertragen werden und am Fernsehbildschirm darstellbar sind. Die Übertragung der zusätzlichen Information erfolgt dabei in digitalisierter und codierter Form. Empfängerseitig werden die zusätzlich übertragenen Informationen decodiert und für eine (wählbare) Einblendung bzw. Darstellung auf dem Bildschirm aufbereitet.

Kabeltext ist die Übertragung von Texten und Graphiken sowie Videobildern auf breitbandigen Kanälen in digitaler Form, wobei im Gegensatz zu Videotext mehr Informationen angeboten und abgefragt werden können, weil für die Informationsübertragung nicht nur bestimmte Zeilen innerhalb der Austastintervalle benutzt werden.

Verschiedentlich kann die Aufzeichnung der übermittelten Informationen zweckmäßig sein, so z. B. als Archivierungshilfe oder zur statistischen Auswertung bestimmter angebotener Informationen u. ä.

Ein Verfahren zur Speicherung digitalisierter Signale ist bereits aus der DE-PS 32 27 373 bekannt. Dabei werden die Signalwerte abgetastet und zunächst als aus binären Signalelementen bestehende Wörter erfaßt. Anschließend werden bestimmte binäre Signalelemente der Wörter zur Mehr-Bit-Abtastwerten zusammengefaßt und nach Digital/Analog-Wandlung, dem Mehr-Bit-Abtastwert entsprechend, als quantisierend gestufte Signale mit gegenüber Störsignalen ausreichend grober Stufung auf ein übliches Breitband-Spei-chermedium, beispielsweise dem Magnetband ei-nes Videorecorders, aufgezeichnet.

Aus « Grundig Revue 1984 », Seite 46 ist darüber hinaus ein nachrüstbarer Video-Aufzeichnungsadapter VAA 1 bekannt, der sich zur Bandaufzeichnung von Videotext-Seiten mit einem Videorecorder eignet. Dieser Aufzeichnungsadapter eignet sich jedoch nur für eine Schwarz/Weiß-Aufzeichnung von Videotext-Seiten, z. B. von Untertiteln für Sprach- und Hörgeschädigte, wobei das Fernsehgerät eingeschaltet sein muß.

Weiterhin ist aus der US-A-3 876 944 bekannt, zur Erhöhung der Datenrate eines Übertragungskanals sendeseitig binäre Signale in Mehrpegelsignale umzuwandeln und empfangsseitig die Mehrpegelsignale wieder in binäre Signale rückumzuwandeln. Die empfangsseitige Rückumwandlung der Mehrpegelsignale in binäre Signale erfolgt unter Verwendung zweier Schmitt-Trigger und eines ODER-Gatters.

Ferner ist es aus der US-A-3 303 284 bekannt, zwei aus binären Daten bestehende digitale Datenströme für eine duobinäre Übertragung zu kombinieren und empfangsseitig aus dem duobinär übertragenen Signal wieder die ursprünglichen binären Datenströme zu gewinnen.

Der Erfindung liegt die Aufgabe zugrunde, eine zur Wiedergabe von in duobinärer Form aufge-zeichneten Telekommunikationssignalen geeig-nete Schaltungsanordnung anzugeben.

Diese Aufgabe wird durch die im Anspruch 1 angegebenen Merkmale gelöst. Vorteilhafte Wei-terbildungen der beanspruchten Schaltungsan-ordnung sind in den Ansprüchen 2 und 3 beschrieben.

Die Erfindung ist in vorteilhafter Weise dann verwendbar, wenn auf einfache Weise eine Aufzeichnung der Signalinformationen mit freier Wahl bei der Wiedergabe der gespeicherten Informationen ermöglicht werden soll, wobei beispiels-weise das komplette Videotext-Informationsange-bot und nicht nur eine einzelne Videotext-Tafel aufgezeichnet werden kann.

Damit wird beispielsweise eine Archivierungshilfe und eine einfache statistische Auswertung bestimmer Informationen, o. ä. möglich. Auch kann die Erfindung bei einem Kabeltextinforma-tionsaufzeichnungs- und -wiedergabesystem ver-wendet werden.

Die Erfindung wird im folgenden unter Bezugnahme auf die Zeichnungsfiguren näher erläutert.

Es zeigen

Fig. 1 u. 2 in schematischer Form eine Anordnung zur Umwandlung der Signalinformation für die Aufzeichnung bzw. Wiedergabe,

Fig. 3 eine schematische Darstellung der gemäß Anordnung nach Fig. 1 umgewandelten Signale und

Fig. 4 Signalzustände bei der Rückumsetzung der Signale.

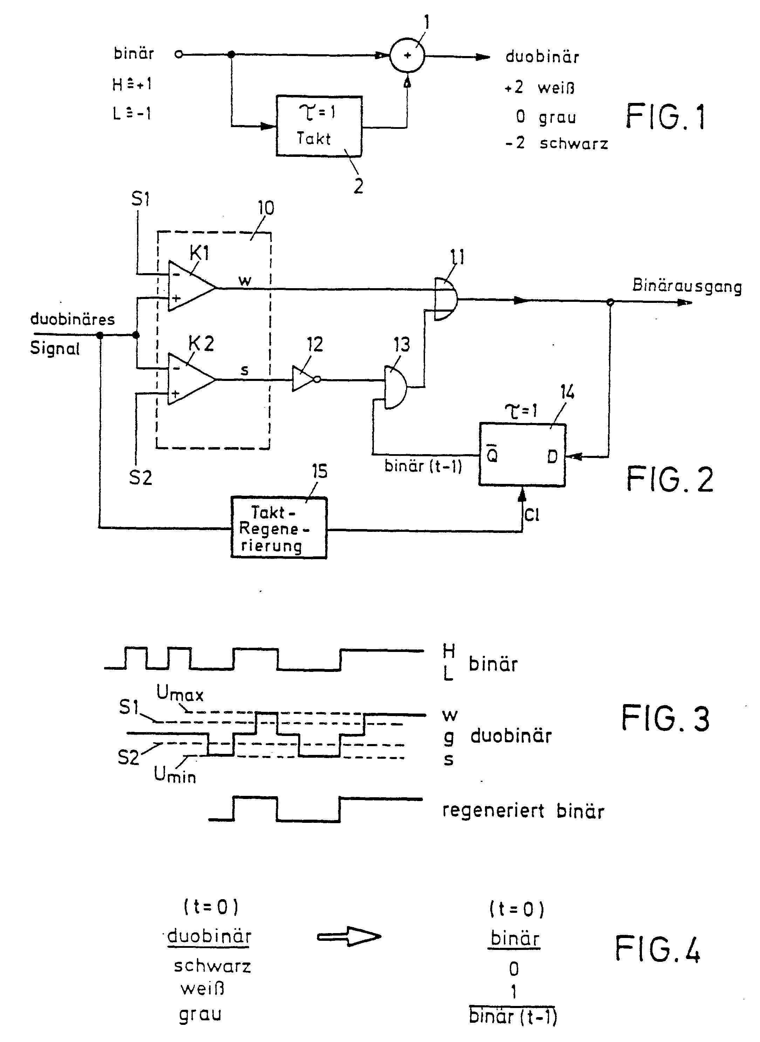

Gemäß Figur 1 wird das Eingangssignal, das in diesem Ausführungsbeispiel ein binäres Videotext-Signal ist, zum einen direkt auf den einen Eingang einer Addierstufe 1 und zum anderen über eine Verzögerungseinrichtung 2 auf den anderen Eingang der Addierstufe 1 geführt, an deren Ausgang ein duobinäres Signal abgreifbar ist. Derartige Codierungsschaltungen sind dem Fachmann geläufig.

Figur 2 zeigt eine Anordnung zur Umcodierung der duobinären Signalinformation in binäre Form zur weiteren Auswertung bei der Wiedergabe. Dabei wird das duobinäre Signal einer Komparatorstufe 10 zugeführt, die gemäß Figur 2 aus zwei Komparatoren K1 und K2 besteht. Wie die Figur 2 zeigt, wird das duobinäre Signal dem nicht-invertierenden Eingang des ersten Komparators K1 und dem invertierenden Eingang des zweiten Komparators K2 zugeführt, wobei die jeweiligen komplementären Eingänge der Komparatoren K1 und K2 mit einem Schwellenwert S1 (Komparator K1) bzw. Schwellenwert 52 (Komparator K2) gespeist werden.

Der Ausgang w des Komparators K1 hat beim Wert « Weiß » den Potentialwert « high », und bei den Werten für « Grau » oder « Schwarz » den Potentialwert « low ». Der Ausgang s des Komparators K2 hat demgegenüber beim Wert für « Schwarz » den Potentialwert « high », und bei « Grau » oder « Weiß » den Potentialwert « low ». Der Ausgang w des Komparators K1 ist mit dem einen Eingang eines ODER-Gliedes 11 verbunden, während der Ausgang s des Komparators K2 über einen Inverter 12 mit dem einen Eingang eines UND-Gliedes 13 verbunden ist, dessen Ausgang mit dem anderen Eingang des ODER-Gliedes 11 verbunden ist. Der andere Eingang des UND-Gliedes 13 ist mit dem invertierenden Ausgang $\overline{Q}$ einer Verzögerungseinrichtung 14 verbunden, die ihrerseits zum einen mit einem Taktsignal Cl einer zwischen Duobinäreingang und Verzögerungseinrichtung 14 geschalteten Taktregenerierungsstufe 15 und zum anderen an ihrem zweiten Eingang D mit dem Ausgangssignal des ODER-Gliedes 11 gespeist wird, wobei am Ausgang des ODER-Gliedes 11 bzw. dem Schaltungsausgang die binäre Signalinformation ansteht.

Die Figur 3 zeigt schematisch den Signalverlauf bei der Umwandlung einer binären Signalinformation in duobinäre Form. Dabei entspricht bei der frequenzmodulierten Aufzeichnung dem höchsten Signalzustand der Weißwert und dem niedrigsten Signalzustand der Schwarzwert, während der Signalzustand Mittelpegel dem Grauwert entspricht. Dieses umgewandelte Signal besitzt dann nur die halbe Bandbreite. Da beim Signalzustand Mittelpegel (Grauwert) des Duobinärcodes nur ein Pegelwechsel festgestellt werden kann, wird zur eindeutigen Auswertung ein Pegelwechsel auf wenigstens einen der beiden anderen Signalzustände (Schwarzwert oder Weißwert) festgestellt (abgewartet) und ausgewertet. Anschließend ist der Binärrückwandler « in Tritt » und läßt erforderlichenfalls Rückschlüsse auf vorhergehende Werte zu. — Die gestrichelten Linien in Figur 3 kennzeichnen zum einen Maximal- bzw. Minimalwerte ($U_{max}$; $U_{min}$), zum anderen Schwellenwerte S1 und S2 (siehe Fig. 2).

. Figur 4 erläutert die Signalzustände bei der Umcodierung der Signale von duobinärer in binäre Form für die Wiedergabe, wobei dem duobinären Wert « — 1 » der binäre Wert « 0 », dem duobinären Wert « + 1 » der binäre Wert « 1 » und dem duobinären Wert für « 0 » für den Zeitpunkt t = 0 der vorhergehende negierte binäre Wert entspricht. Bei der frequenzmodulierten Aufzeichnung auf Videomagnetband entspricht der genannte Wert « — 1 » dem Videosignal « Schwarz », der Wert « + 1 » dem Videosignal « Weiß » und der Wert « 0 » dem Videosignal « Grau ».

Bei der oben beschriebenen Schaltungsanordnung wird eine Taktregenerierung (mittels einer PLL-Schaltung, EX-OR-Schaltung, o. ä.) mittels der Duobinärsignalflanken bewerkstelligt, während « — 1 » oder « + 1 » ausgewertet wird, um die Synchronisation einzuleiten. Entsprechend werden im binären Teil mindestens zwei Einsen oder zwei Nullen hintereinander ausgewertet.

## Patentansprüche

1. Schaltungsanordnung zur Wiedergabe von in duobinärer Form aufgezeichneten Telekommunikations-Signalen, dadurch gekennzeichnet, daß

das wiedergegebene duobinäre Signal einer Komparatorstufe (10) und einer Taktregenerierungsstufe (15) zugeführt ist,

die Komparatorstufe (10) zwei Komparatoren (K1, K2) enthält, wobei dem nicht-invertierenden Eingang des ersten Komparators (K1) und dem invertierenden Eingang des zweiten Komparators (K2) das wiedergegebene duobinäre Signal und dem jeweils komplementären anderen Eingang der Komparatoren (K1, K2) Schwellenwerte (S1, S2) zugeführt sind,

der Ausgang (s) des zweiten Komparators (K2) über einen Inverter (12) mit dem einen Eingang eines UND-Gliedes (13) verbunden ist,

der Ausgang (w) des ersten Komparators (K1) mit dem einen Eingang eines ODER-Gliedes (11) verbunden ist,

der andere Eingang des UND-Gliedes (13) mit dem invertierenden Ausgang (Q) einer Verzögerungseinrichtung (14) verbunden ist,

die Verzögerungseinrichtung (14) zum einen mit einem in der Taktregenerierungsstufe (15) erzeugten Taktsignal (CL) und zum anderen mit dem Ausgangssignal des ODER-Gliedes (11) gespeist wird,

dem anderen Eingang des ODER-Gliedes (11) das Ausgangssignal des UND-Gliedes (13) zugeführt ist, und

am Ausgang des ODER-Gliedes (11) die binäre Signalinformation ansteht.

2. Schaltungsanordnung nach Anspruch 1, dadurch gekennzeichnet, daß die Taktregenerierungsstufe (15) eine PLL-Schaltung enthält.

3. Schaltungsanordnung nach Anspruch 1, dadurch gekennzeichnet, daß die Taktregenerierungsstufe (15) eine EX-OR-Schaltung enthält.

## Claims

1. Circuit arrangement for reproducing telecommunication signals recorded in duo-binary form, characterized in that

the duo-binary signal reproduced is supplied to a comparator stage (10) and to a clock regeneration stage (15),

the comparator stage (10) contains two comparators (K1, K2), the non-inverting input of the first comparator (K1) and the inverting input of the second comparator (K2) being supplied with the reproduced duo-binary signal and the respectively complementary other input of the comparators (K1, K2) being supplied with threshold values (S1, S2),

the output (s) of the second comparator (K2) is connected via an inverter (12) to one input of an AND gate (13),

the output (w) of the first comparator (K1) is connected to one input of an OR gate (11),

the other input of the AND gate (13) is connected to the inverting output (Q) of a delay device (14),

the delay device (14) is fed on the one hand, with a clock signal (CL) generated in the clock regeneration stage (15) and, on the other hand, is fed with the output signal of the OR gate (11),

the other input of the OR gate (11) is supplied with the output signal of the AND gate (13), and

the binary signal information is present at the output of the OR gate (11).

2. Circuit arrangement according to Claim 1, characterized in that the clock regeneration stage (15) contains a PLL circuit.

3. Circuit arrangement according to Claim 1, characterized in that the clock regeneration stage (15) contains an EX-OR circuit.

## Revendications

1. Montage pour la reproduction des signaux de télécommunications, enregistrés sous forme duobinaire, caractérisé en ce que

le signal duobinaire reproduit est envoyé à un étage comparateur (10) et à un étage (4) de régénération de la cadence,

l'étage comparateur (10) contient deux comparateurs (K1, K2), le signal duobinaire reproduit étant envoyé à l'entrée non inverseuse du premier comparateur (K1) et à l'entrée inverseuse du second comparateur (K2), et des valeurs de seuil (S1, S2) étant envoyées à l'autre entrée respectivement complémentaire des comparateurs (K1, K2),

la sortie (S) du second comparateur (K2) est reliée par l'intermédiaire de l'inverseur (12) à l'entrée d'un circuit ET (13),

la sortie (w) du premier comparateur (K1) est reliée à une entrée d'un circuit OU (11),

l'autre entrée du circuit ET (13) est reliée à l'autre entrée inverseuse (Q) d'un dispositif de retardement (14),

le dispositif de retardement (14) est alimenté d'une part par un signal de cadence (CL) produit dans l'étage (15) de régénération de la cadence et d'autre part par le signal de sortie du circuit OU (11),

le signal de sortie du circuit ET (13) est envoyé à l'entrée du circuit OU (11), et

l'information binaire de signal est présente à la sorte du circuit OU (11).

2. Montage selon la revendication 1, caractérisé en ce que l'étage (15) de régénération de la cadence contient un circuit PLL.

3. Montage selon la revendication 1, caractérisé en ce que l'étage de régénération de la cadence (15) contient un circuit OU-EXCLUSIF.

FIG.1

FIG.2

FIG.3

FIG.4